# EUROPEAN PATENT SPECIFICATION

(11) **EP 2 113 006 B1**
(45) Date of publication and mention of the grant of the patent: **05.12.2012**
(21) Application number: 08723266.6
(22) Date of filing: 04.03.2008
(51) Int. Cl.: C08J 9/16

(54) **METHOD FOR MANUFACTURING POLYOLEFIN FOAMED PARTICLES**
VERFAHREN ZUR HERSTELLUNG VON POLYOLEFIN-SCHAUMSTOFF-PARTIKELN
PROCÉDÉ DE FABRICATION DE PARTICULES MOUSSÉES DE POLYOLÉFINE

(30) Priority: 29.02.2008 KR 20080019183
(43) Date of publication of application: 04.11.2009
(73) Proprietor: Howtech Corporation Co., Ltd., Gyeonggi-do 467-861 (KR)
(72) Inventor: HONG, Bo Na, Seoul 139-240 (KR); JUNG, Ha Young, Jeongbu-si Gyeonggi-do 480-100 (KR); LIM, Sung Hwan, Icheon-si Gyeoggi-do 467-719 (KR); LEE, Gun Min, Ghungcheongnam-do 340-801 (KR); KIM, Dong Kyun, Chungcheongnam-do 340-381 (KR)
(74) Representative: Eisenführ, Speiser & Partner
(86) International application number: PCT/KR2008/001228
(87) International publication number: WO 2009/107887

(56) References cited:
- JP-B- 7 017 781
- KR-A- 20010 073 312
- KR-A- 20010 076 488
- KR-B1- 0 146 679
- KR-B1- 100 777 214
- US-A- 4 602 047
- US-B1- 6 506 807

## Description

### Technical Field

This invention relates to a method for preparing polyolefin-based foamed particles, and more particularly, to a method for preparing polyotefin-based foamed particles, wherein a specific dispersion medium that need not wash and is reused is used to thereby making it possible to prepare foamed particles with excellent mold ability without a washing process, and a dispersion medium used in a foaming process is reused to thereby making it possible to reduce the preparation cost.

### Background Art

Polyolefin-based molded foams are variously used since the polyolefin-based molded foams are excellent in physical properties, such as impact resistance, flexibility, elasticity, chemical resistance, heat resistance, and heat insulation property, as compared with other molded foams.

Methods for preparing molded foams are mainly divided into a method for preparing molded foams in the form of rods or sheets using extruders and a method for preparing molded foams in the form of foamed particles using a pressure resistant vessel. The method for preparing molded foams using extruders can produce simple shaped molded articles inexpensively. However, it has difficulties in manufacturing various shaped molded articles requested in practical industrial sites. On the other hand, the method for preparing molded foams using a pressure resistant vessel has an advantage in that the method can produce various shaped articles by molding prepared foamed particles in correspondence to desired shapes of final articles. Furthermore, molded articles using foamed particles are widely used at the present time since the molded articles can be advantageously produced to have more excellent physical properties than extrusion molded articles. For instance, molded articles using foamed polypropylene particles are excellent in impact resistance, heat resistance, and the like, whereby the molded articles are used widely as a packing material requiring a high load or an automobile structural material requiring mechanical strength and demand for the molded articles is gradually increased.

In general, polyolefin-based foamed particles are prepared by dispersing polyolefin-based resin particles into a dispersion medium and simultaneously causing a foaming agent to be contained (penetrated) into the resin particles in a pressure resistant vessel (sealed vessel) at the same time, maintaining the mixture in a heated/pressurized atmosphere, and discharging the resin particles together with the dispersion medium into an atmosphere of a pressure lower than an internal pressure of the pressure resistant vessel (dropping pressure of the pressure resistant vessel). The dispersion medium is a mixture of a dispersion medium as a solvent and a dispersant (fusion preventing agent) for preventing fusion between the resin particles. For instance, the technique using water as the dispersion medium and using kaolin, aluminum oxide and the like as the dispersant (fusion preventing agent) is proposed in Korean Patent Laid-open Publication No. 1999-0082531 (Patent Document 1).

However, a prior art. including Patent Document 1, has problems in that a preparation process is complicated since a washing process and a wastewater treatment process are required after a foaming process, which causes an excessive facility investment cost and therefore an increased preparation cost. Specifically, a dispersion medium used in the prior art deteriorates moldability of foamed particles. More specifically, a dispersant of a conventional dispersion medium adheres to surfaces of foamed particles, so that adhesion (fusion) between the particles is lowered when molding, thereby causing the moldability to be deteriorated. Therefore, a preparation method according to the prior art needs a washing process of cleaning a dispersion medium (dispersant).

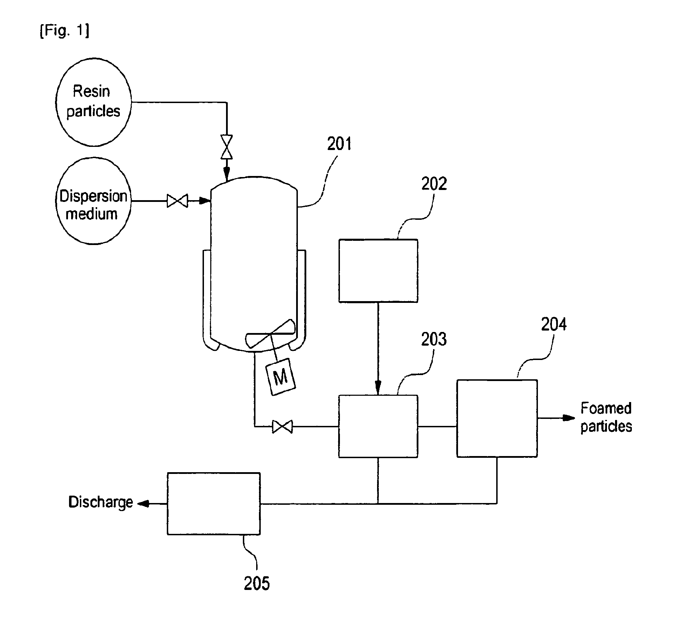

A large amount of water (washing water) is used in the washing process, and the used water (washing water) is treated through wastewater treatment equipment since it is impossible to reuse the used water (washing water). Fig. 1 is a view showing the configuration of a preparation apparatus used for preparing polyolefin-based foamed particles according to the prior art.

As illustrated in Fig. 1, the preparation apparatus according to the prior art includes a pressure resistant vessel 201 into which resin particles and a dispersion medium are injected, and a washing water supply tank 202, a washer 203 and a wastewater treatment equipment 205 are additionally installed thereto as the aforementioned washing process is performed. In Fig. 1, reference numeral 204 designates a dryer for drying the foamed particles discharged from the washer 203, and reference sign M designates a motor for driving a stirrer installed in the vessel 201.

ln the meantime, an effort for reducing the amount of generated wastewater by reducing the amount of washing water used in the washing process has been made.

For instance, a method using hot water, as washing water, containing a water-soluble compound having a functional group bondable to a surface of a sparingly water-soluble inorganic compound used as a dispersant together with a hydrophilic functional group in a single molecule is proposed in Japanese Patent Laid-open Publication No. 2000-290419 (Patent Document 2). Although the method proposed in Patent Document 2 cannot require a large amount of washing water for removing a dispersant adhering to surfaces of polyolefin-based foamed particles by adding a water-soluble compound bondable to the dispersant into washing water, the method is also accompanied by a washing process using washing water.

Furthermore, a method wherein a washing process is not required using a dispersion medium prepared by mixing a dispersion medium (e.g., water) with a dispersant (e.g., aluminum oxide, aluminosilicate and magnesium carbonate) and further adding a dispersion reinforcement (e.g., magnesium chloride, magnesium nitrate and magnesium carbonate) to the mixture to reinforce dispersibility of the dispersant is proposed in Japanese Patent Laid-open Publication No. 2001-164024 (Patent Document 3). However, the method proposed in Patent Document 3 makes it possible to perform a washing process only with water without using washing water containing diluted hydrochloric acid or the like, so that the method is also accompanied by the washing process.

As described above, according to the prior art, the preparation process is complicated since washing and wastewater treatment processes are additionally required after performing a foaming process, and a facility investment cost is excessively needed since incidental facilities such as the washing water supply tank 202, the washer 203 and the wastewater treatment equipment 205 are accompanied. Accordingly the preparation cost is increased, and there is an environmental problem due to the generation of wastewater.

Furthermore, when a dispersion medium having high temperature discharged in the foaming process is reused, the dispersion medium can be used as a useful energy source. However, there is pointed out a problem in that a dispersion medium used in the prior art can not be reused. Specifically, when a dispersion medium itself and high temperature heat (waste heat) of the dispersion medium are reused, energy can be reduced. However, the prior art has problems in that energy is excessively consumed since the dispersion medium can not be reused and in that an environmental problem is generated due to the treatment of a discharged dispersion medium.

[Patent Document 1] Korean Patent Laid-open Publication No. 1999-82531

[Patent Document 2] Japanese Patent Laid-open Publication No. 2000-290419

[Patent Document 3] Japanese Patent Laid-open Publication No. 2001-164024

US 6,506,807 discloses a process for preparing pre-expanded particles of a thermoplastic resin, the process comprising charging particles of a thermoplastic resin and an aqueous dispersion medium containing a dispersing agent into a closed pressure vessel, heating the resulting aqueous dispersion to a temperature of not less than the softening point of the thermoplastic resin, thereby impregnating the particles with water to have a water content of 1 to 50 % by weight, releasing the dispersion into a lower pressure atmosphere, thereby expanding the particles, recovering the dispersion medium containing the dispersing agent, and recycling it as a dispersion medium to the pressure vessel.

US 4,602,047 describes a process for producing foamed particles of a polyolefin resin which comprises dispersing polyolefin resin particles in water in a closed vessel, feeding a volatile blowing agent into the closed vessel, heating the dispersion to a temperature above the softening point of the polyolefin resin particles but below their melting point, opening a discharge port provided within the closed vessel below the water surface and releasing the aqueous dispersion containing the polyolefin resin particles impregnated with the blowing agent into an atmosphere kept at a lower pressure than the pressure within the closed vessel.

### Disclosure of Invention

### Technical Problem

This invention is conceived to solve the aforementioned problems in the prior art. An object of the this invention is to provide a method for preparing polyolefin-based foamed particles, wherein a specific dispersion medium that need not wash and is reused is used to thereby making it possible to prepare foamed particles with excellent moldability without a washing process, and the preparation process is simplified and facilities can be reduced to thereby reduce a preparation cost.

In addition, another object of this invention is to provide a method for preparing polyolefin-based foamed particles, in which a high temperature dispersion medium discharged in the foaming process is reused to thereby reduce energy and therefore the preparation cost considerably.

### Technical Solution

This invention for achieving the objects provides a method for preparing polyolefin-based foamed particles. The method comprised the steps of a dispersion step of mixing polyolefin-based resin particles with a dispersion medium to prepare a dispersion solution, the dispersion medium including at least one selected from sorbate, sorbitan, polyoxyethylene, amine oxide, betaine, and derivatives thereof: a foaming step of adding a foaming agent into the dispersion, heating the mixture to raise a temperature of the mixture, and preparing polyolefin-based foamed particles through pressure drop of the heated mixture; and a separation step of separating the dispersion medium from the prepared polyolefin-based foamed particles to obtain polyolefin-based foamed particles.

The method for preparing polyolefin-based foamed particles according to this invention further comprises a reusing step of recovering the dispersion medium separated in the separation step to use the recovered dispersion medium as the dispersion medium in the dispersion step.

Also, the dispersion medium of the dispersion step preferably includes 0.1 to 5.0 weight parts of at least one selected from sorbate, sorbitan, polyoxyethylene, amine oxide, betaine, and derivatives thereof with respect to 100 weight parts of a dispersion medium as a solvent.

In addition, it is preferable that the polyolefin resin be polypropylene or polypropylene copolymer. The foaming agent may include carbon dioxide.

Further, the method may be performed using a preparation apparatus including a vessel into which a dispersion medium, polyolefin-based resin particles and a foaming agent are inputted; a separator for separating polyolefin-based foamed particles and dispersion medium discharged from the vessel from each other; a dryer for drying polyolefin-based foamed particles discharged from the separator, and a recycle line for recovering dispersion medium discharged from the separator and delivering the dispersion medium to the vessel. At this time, as the separator may include a separation part having perforated holes formed therein.

### Advantageous Effects

According to this invention, a dispersion medium that need not wash and is reused is used, so that it is not necessary to perform a washing process or a wastewater treatment process. Therefore, there are advantageous effects in that the preparation process is simplified and facilities can be reduced to thereby reduce a preparation cost, and foamed particles can be prepared environmentally friendly without generating wastewater.

Furthermore, according to this invention, a high temperature dispersion medium discharged in the foaming process is reused to thereby reduce the preparation cost considerably. Specifically, a purchase cost of dispersion medium can be reduced due to the reuse of the dispersion medium, as well as energy can be reduced due to the reuse of high temperature heat (waste heat) of the dispersion medium.

### Brief Description of the Drawings

Fig. 1 is a view of the configuration of a preparation apparatus used for preparing polyolefin-based foamed particles according to a prior art.

Fig. 2 shows a view of the configuration of a preparation apparatus preferably used for preparing polyolefin-based foamed particles according to this invention.

Fig. 3 is a view showing the configuration of an embodiment of a separator of the preparation apparatus illustrated in Fig. 2.

### Best Mode for Carrying Out the Invention

Hereinafter, this invention will be described more In detail.

A method for preparing polyolefin-based foamed particles according to this invention at least comprises (1) a dispersion step (dispersion solution preparing step) of inputting and mixing a dispersion medium and polyolefin-based resin particles into a pressure resistant vessel; (2) a foaming step of additionally inputting a foaming agent into the vessel to prepare polyolefin-based foamed particles; and (3) a separation step of obtaining polyolefin-based foamed particles.

At this time, the specific dispersion medium (specifically, a dispersant) for achieving the objects of this invention is used in the dispersion step. The preparation method of this invention further comprises (4) a step of recovering the dispersion medium separated in the separation step to reuse the recovered dispersion medium as the dispersion medium of the dispersion step.

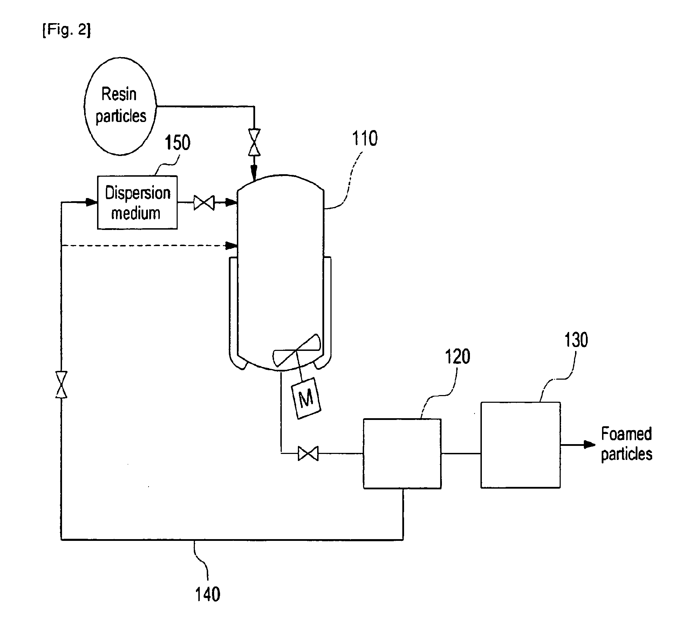

The respective steps will be described in detail as follows with reference to the accompanying drawings. Fig. 2 shows a view of the configuration of a preparation apparatus preferably used in this invention.

The dispersion step (1) is a step (a dispersion solution preparing step) of mixing mad stirring at least a dispersion medium and polyolefin-based resin particles to uniformly disperse the polyolefin-based resin particles. Such a dispersion step (1) may be performed in a pressure resistant vessel 110 installed in the preparation apparatus as illustrated in Fig. 2, or in a separate mixing vessel. It is preferable that the dispersion step be performed in the pressure resistant vessel 110 installed in the preparation apparatus as illustrated in Fig. 2

The dispersion medium according to this invention comprises at least one selected from sorbate, sorbitan, polyoxyethylene, amine oxide, betaine, and derivatives thereof. Specifically, the dispersion medium comprises a dispersion medium as a solvent and a dispersant for dispersing resin particles, wherein the dispersant according to this invention includes one selected from sorbate, sorbitan, polyoxyethylene, amine oxide, betaine, and derivatives thereof, or a mixture thereof. At this time, as examples of the derivatives, sorbate (or polyoxyethylene) derivatives include polyoxyethylene sorbitan monostearate, polyoxyethylene sorbitan monooleate and the like, sorbitan derivatives include sorbitan monopalmitate, sorbitan monooleate and the like, and amine oxide derivatives include lauryl dimethyl amine oxide and the like. Furthermore, commercialized products can be used as the dispersant. For instance, Tween as sorbate, Span as sorbitan, Betaine as betaine or the like may be used. Although the commercialized products can be procured from various places, the Tween and Span in the products can be procured, for example, from Ilshinwells Corporation (413-1, Hapjeong-dong, Mapo-gu. Seoul, Korea), and the Betaine can be procured, for example, from Dongnam Chemical Co. Ltd. (385-1, Chungcheon-dong, Bupyung-gu, Incheon, Korea).

According to this invention, the specific dispersion medium, i.e., the listed dispersants do not deteriorate moldability of foamed particles. Specifically, the dispersants do not change the inherent physical properties of the resin particles themselves, for example, neither color nor contract polyolefin-based resin particles. Therefore, foamed particles having excellent moldability can be obtained even without performing a washing process after a foaming process. That is, the foamed particles are fused to one another to manufacture a desired molded article easily although the foamed particles are not washed after the foaming process. Furthermore, the dispersion medium (i.e., dispersant) can be reused since a composition of the dispersion medium is not changed even after the foaming process.

The dispersion medium preferably comprises 0.01 to 5.0 weight parts, more preferably 0.05 to 2 .5 weight parts of the listed dispersant with respect to 100 weight parts of the dispersion medium. At this time, if the dispersant content is less than 0.01 weight part, an effect according to the dispersant content (dispersion of the resin particles) is little. If the dispersant content exceeds 5.0 weight parts, a synergistic effect due to the excessive dispersant content is not large and it is not desirable in economical aspect. Furthermore, although not particularly limited, the dispersion medium (dispersion medium and dispersant) is preferably used in the amount of 150 to 1.000 weight parts with respect to 100 weight parts of the resin particles.

Any materials can be used as the dispersion medium as a solvent used in the dispersion medium if materials have a bad influence upon the dispersant without dissolving the resin particles. For instance, although not particularly limited, the dispersion medium as a solvent include at least one selected from water, alcohols (methanol, ethanol, and the like), glycols (ethylene glycol, propylene glycol, and the like) and glycerin, and water is preferably used.

Furthermore, the polyolefin-based resin particles usable in this invention are not particularly limited, and any polyolefin-based resins known well to the art can be used. For example, the polyolefin-based resin include one selected from polyethylene (including low density polyethylene and high density polyethylene), polypropylene (including low density polypropylene and high density polypropylene), polybutene, polyurethane and copolymers thereof, or a mixture thereof. For instance, the copolymers, specifically, include ethylene-propylene copolymer, butene-propylene copolymer, ethylene-butene-propylene copolymer, and the like. At this time, the copolymers include random copolymers, block copolymers, graft copolymers and the like. As the polyolefin-based resin, polypropylene or polypropylene copolymer in the listed polyolefin-based resins may be advantageously used in this invention, wherein the polypropylene copolymer contains polypropylene in the content of 70% or more.

The dispersion solution prepared in the dispersion step (1) of this invention comprises at least the aforementioned dispersion medium and polyolefin-based resin particles, and the polyolefin-based resin particles may further comprise other additives optionally. The additives have been normally used in the art, and types of the additives can be selected according to uses and objects of a product. For instance, the additives can be selected from antioxidants, UV absorbers, antistatic agents, flame retardants, pigments (including color pigments and fluorescent pigments), foam control agents, and the like.

The foaming step (2) is a step of further adding a foaming agent into the dispersion solution prepared in the dispersion step (1) to prepare polyolefin-based foamed particles. Such a foaming step (2) is carried out through the sealed pressure resistant vessel 110. Specifically, a foaming agent is inputted into the pressure resistant vessel 110 in which resin particles are dispersed in the dispersion medium, and then, the mixture is heated above the softening temperature of the resin particles, thereby causing the foaming agent to be contained (penetrated) into the resin particles to provide the foaming properties to the resin particles. Then, the pressure resistant vessel 110 is maintained in a temperature at which the resin particles can be foamed, and a discharge valve of the pressure resistant vessel 110 is opened at that temperature, thereby discharging the dispersion medium and the polyolefin-based resin particles into an atmosphere having a pressure lower than the pressure resistant vessel 110 (i.e., dropping the pressure thereof). In such a discharge process, the resin particles are formed into foamed particles by the pressure drop.

Foaming agents ordinarily used in the art can be used as the foaming agent. For example, the foaming agents include hydrocarbon-based foaming agents such as propane, n-butane, isobutane and n-pentane; inorganic foaming agents such as carbon dioxide and nitrogen; and mixtures thereof. Preferably, the foaming agents include at least carbon dioxide. Specifically, as the foaming agent, carbon dioxide is solely used, or a mixture in which carbon dioxide is mixed with a hydrocarbon-based foaming agent (e.g., propane and the like) and/or other inorganic foaming agent (e.g., nitrogen and the like) is preferably used.

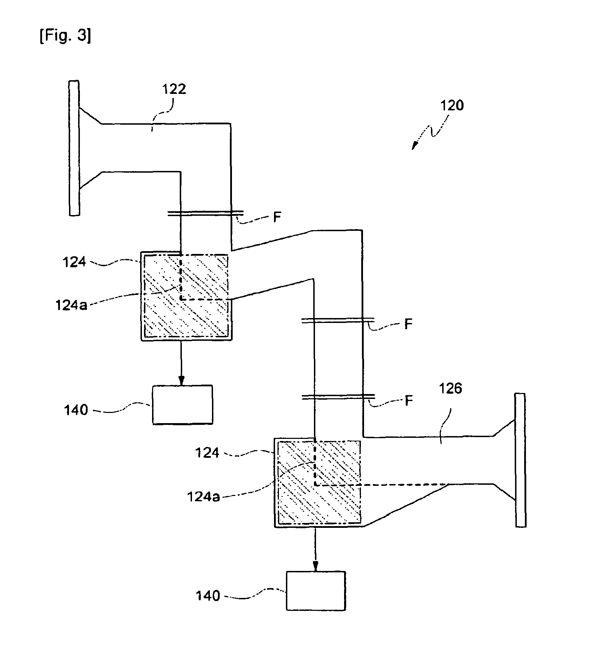

The separation step (3) is a step of obtaining polyolefin-based foamed particles by separating the dispersion medium from the polyolefin-based foamed particles discharged in the foaming step (2). The polyolefin-based foamed particles and the dispersion medium can be separated easily by a method using a specific gravity difference thereof, and also, by a method using air flow through a separator 120 (see Fig. 3) having a perforated structure, which will be described later.

After drying the polyolefin-based foamed particles obtained in the separation step (3) in a dryer 130, the dried polyolefin-based foamed particles are used for preparing a molded article. At this time, a surplus of the foaming agent remaining after participating in foaming is removed in the dryer 130.

The reusing step (4), which is included in the method of this invention, is a step of reusing the dispersion medium separated in the separation step (3). Specifically, the reusing step (4) is a step of recovering the dispersion medium separated from the polyolefin-based foamed particles through the separation step (3) to reuse the recovered dispersion medium as the dispersion medium of the dispersion step (1).

After recovering the dispersion medium from the separator 120, the recovered dispersion medium is reused by being directly supplied into the pressure resistant vessel 110 through a recycle line 140, or by being supplied into the pressure resistant vessel 110 via a dispersion medium containing tank 150. As described above, a dispersion medium used in this invention can be reused since the dispersion medium exists as it is without changing its physical properties even after the foaming process. At this time, the next preparing process can be carried out if a dispersion medium is additionally supplemented by the amount of the dispersion medium that has been discharged together with the foamed particles.

The preparation method according to this invention described above can be implemented through a preparation apparatus that can perform a foaming process, wherein the preparation apparatus includes any one comprising at least a pressure resistant vessel capable of performing the foaming process. Preferably, the preparation apparatus illustrated in Fig. 2 can be used usefully

Referring to Fig. 2, the preparation apparatus preferably used in this invention will be described. The preparation apparatus includes a pressure resistant vessel 110 into which a dispersion medium, polyolefin-based resin particles and a foaming agent are inputted; a separator 120 for separating the polyolefin-based foamed particles and dispersion medium discharged from the vessel 110 from each other; a dryer 130 for drying the polyolefin-based foamed particles discharged from the separator 120; and a recycle line 140 for recovering the dispersion medium discharged from the separator and delivering the dispersion medium to the vessel 110. Furthermore, the preparation apparatus further includes a dispersion medium containing tank 150. At this time, the recycle line 140 can communicate with the pressure resistant vessel 110, or the dispersion medium containing tank 150 as illustrated in Fig. 2.

In addition, Fig. 3 shows an exemplary embodiment of a separator 120 of the preparation apparatus illustrated in Fig. 2. Referring to Fig. 3, the separator 120 includes an inflow part 122 into which polyolefin-based foamed particles and a dispersion medium are introduced; and a separation part 124 in which perforated holes 124a are formed to separate the polyolefin-based foamed particles and the dispersion medium, which have been introduced through the inflow part 122, from each other. The foamed particles obtained through the separation part 124 are supplied into the dryer 130 (see Fig. 2) through a discharge part 126, and the dispersion medium recovered from the separation part 124 Is reused through the recycle line 140. In addition, one or more of the separation parts 124 may be installed in the separator 120, and the separator 120 with two separation parts 124 installed is illustrated in Fig. 3. The polyolefin-based foamed particles in such a separator 120 can be discharged through the discharge part 126 by the air flow supplied from an air supply means (not shown). In Fig. 3, a reference sign F designates a flange.

According to this invention described above, a dispersion medium that need not wash and is reused is used, so that it is not necessary to carry out additionally a washing process or a wastewater treatment process after the foaming process. Accordingly, the preparation process is simplified and reduction of facilities is possible, thereby reducing the preparation cost, and there is no generation of wastewater, thereby preparing the foamed particles environmentally friendly. Furthermore, the dispersion medium is reused to thereby reduce a purchase cost of dispersion medium. In addition, high temperature heat of the dispersion medium is reused to thereby reduce energy. More specifically, the dispersion medium discharged in the foaming step (2) is maintained at a high temperature by heating the dispersion medium and raising the temperature thereof, wherein the dispersion medium of the high temperature is reused to reduce energy required in heating the dispersion medium and raising the temperature thereof in the foaming step (2) that will be carried out again.

Hereinafter, specific examples of this invention and comparative examples will be illustrated. The following examples are only provided for helping understand this invention, but the technical scope of this invention is not limited thereby.

[Examples]

After 100 weight parts of ethylene-propylene copolymer resin particles and 300 weight parts of a dispersion medium were inputted into a reaction tank, and while stirring them by a magnetic drive, 6 kg of carbon dioxide as a foaming agent was inputted into the reaction tank, the mixture was heated and the temperature thereof is raised. After heating the reaction tank to rise the temperature thereof to 152°C. the pressure in the reaction tank was adjusted to 4216.86 kPa (43 kg/cm²) by secondly inputting carbon dioxide thereinto. Then, a discharge valve of the reaction tank was opened at the foregoing pressure to discharge the dispersion medium and the resin particles into the atmospheric pressure. When discharging the dispersion medium and the resin particles, carbon dioxide was supplied into the reaction tank to maintain the pressure of the reaction tank at 4216.86 kPa (43 kg/cm²) until all the resin particles and the dispersion medium were discharged.

Thereafter, the foamed particles and the dispersion medium discharged from the reaction tank were separated from each other, and then, each of them was recovered. Foamed particle samples according to these examples were prepared by drying the recovered foamed particles through a dryer as they are without washing the foamed particles. In these examples, a mixture of water and dispersant was used as the dispersion medium, wherein as the dispersant, 2.0 weight parts of polyoxyethylene (Example 1),2.4 weight parts of sorbitan (Example 2),3.15 weight parts of a mixture of sorbitan and betaine (Example 3), 2.15 weight parts of a mixture of polyoxyethylene and betaine (Example 4),2.5 weight parts of sorbate (Example 5), 1.4 weight part of betaine (Example 6), 2.4 weight parts of lauryl dimethyl amine oxide (Example 7), and 3.0 weight parts of a mixture of sorbate and lauryl dimethyl amine oxide (Example 8) with respect to 100 weight parts of water were variously used.

After evaluating external appearances of the foamed particle samples prepared in the examples, evaluation results thereof were represented in the following Table 1. Satisfactory degrees of the external appearances of the samples were determined through the naked eye observation in such a way that spherical foamed particles without discoloration were rated as "0" and foamed particles contracted or discolored due to the penetration of the dispersion medium were rated as "x".

Additionally, after randomly taking 10 liters of the foamed particles in order to check whether the foamed particles were fused to each other in the preparation process of foamed particles, it was evaluated whether the foamed particles were fused to one another, and then, the evaluation results were represented in the following Table 1. It was evaluated whether the foamed particles were fused to one another in the reaction tank in such a manner that foamed particles not fused to one another were rated as "0" and foamed particles fused to one another were rated as "x".

In addition, after leaving the prepared foamed particles alone at a room temperature and a normal pressure for 24 hours and applying a pressure of 294.2 kPa (3 kgf/ cm²) to the foamed particles for 24 hours, the foamed particles were filled in a mold having internal dimensions of 300 mm 300 mm 10 mm and heated and pressed using steam having a pressure of 196.13 to 294.2 kPa (2.0 to 3.0 kgf/ cm²) to mold the foamed articles. After drying such prepared molded articles in an oven of a temperature of 60°C for 24 hours and cutting the molded articles in order to check a fusion state of particles in the molded articles, cross sections of the molded articles were observed to evaluate moldability, and the evaluation results were represented in the following Table 1 (non-washing moldability in Table 1). At this time, the moldability was determined in such a way that molded articles in which at least 80% of the particles themselves were cut on the cross section thereof were rated as "0" and molded articles in which not greater than 80% of the particles themselves were cut on the cross section thereof were rated as "x".

In the meantime, the recovered dispersion medium was introduced into a new foamed particle-preparing process and reused. Then, reusing such a dispersion medium, external appearances of the foamed particles, whether the foamed particles were fused to one another, and moldability of the foamed particles were evaluated on foamed particles prepared in the same manner as the foregoing method. At this time, it was determined whether the dispersion medium was reusable in such a way that foamed particles which are good in all the external appearances, whether the foamed particles were fused to one another and moldability under the foregoing standards were rated as "0" and foamed particles which are defective in at least one of the external appearancees, whether the foamed particles were fused to one another, and moldability under the foregoing standards were rated as "x" and then, the determination results were represented in the following Table 1.

[Comparative Examples]

The comparative examples were carried out in the same method as in the foregoing examples except that dispersion medium was used different from the foregoing examples. Specifically, the dispersion medium was used by mixing dispersants with water, wherein foamed particles were prepared by carrying out the comparative examples in the same methods in the foregoing examples except that, as the dispersants, 2.0 weight parts of magnesium carbonate (Comparative Example 1), 0.4 weight part of calcium phosphate (Comparative Example 2), 0.3 weight part of lecithin (Comparative Example 3). 0.3 weight part of vegetable oil (Comparative Example 4), and 0.1 weight part of kaolin (Comparative Example 5) with respect to 100 weight parts of water were variously used. At this time, 0.04 weight part of sodium dodecyl benzene sulfonate as a dispersion aid was further added in Comparative Example 2 and Comparative Example 5.

After evaluating the external appearances of the foamed particles prepared according to the respective comparative examples, whether the foamed particles were fused to one another, non-washing moldability of the foamed particles, and whether the foamed particles were reusable in the same method as in the examples, the evaluation results were represented in the following Table 1.

**Table 1**

| [Table 1] | | | | | | | |
|---|---|---|---|---|---|---|---|
| Remarks | Dispersion medium | | | External appearance | Whether formed particles are fused | Non-wasting moldability | Whether foamed particles are reused |
| | Type of dispersant | Added amount of dispersant (weight part) | Added amount of dispersion aid (weight part) | | | | |
| Example 1 | Polyoxyethylene | 2.0 | - | ○ | ○ | ○ | ○ |
| Example 2 | Sorbitan | 2.4 | - | ○ | ○ | ○ | ○ |
| Example 3 | Sorbitan + betaine | 3.15 | - | ○ | ○ | ○ | ○ |
| Example 4 | Polyoxyethylene + betaine | 2.15 | - | ○ | ○ | ○ | ○ |
| Example 5 | Sorbate | 2.5 | - | ○ | ○ | ○ | ○ |
| Example 6 | Betaine | 1.4 | - | ○ | ○ | ○ | ○ |
| Example 7 | Lauryl dimethyl amine oxide | 2.4 | - | ○ | ○ | ○ | ○ |
| Example 8 | Sorbate + lauryl dimethylamine oxide | 3.0 | - | ○ | ○ | ○ | ○ |
| Comparative Example 1 | Magnesium carbonate | 2.0 | - | ○ | ○ | × | × |
| Comparative Example 2 | Calcium phosphate | 0.4 | 0.04 | ○ | ○ | × | × |
| Comparative Example 3 | Lecithin | 0.3 | - | × | ○ | ○ | × |
| Comparative Example 4 | Castor oil | 0.3 | - | × | × | - | - |
| Comparative Example 5 | Kaolin | 0.1 | 0.04 | ○ | ○ | × | × |

As represented in Table 1, it can be seen that the foamed particles are excellent in external appearances, whether the foamed particles are fused to one another and non-washing moldability, and the foamed particles are reusable in case of the examples using a specific dispersion medium according to this invention. On the contrary, it can be seen that the external appearances of the foamed particles are poor, the foamed particles are fused to one another during the foaming process, and the foamed particles do not have non-washing moldability in case of using a dispersion medium used in the prior art. In particular, it can be seen that the foamed particles of the comparative examples cannot be reused. Furthermore, when inventors of this invention use lecithin (Comparative Example 3) as a fatty acid and castor oil (Comparative Example 4) as a vegetable oil in addition to magnesium carbonate (Comparative Example 1), calcium phosphate (Comparative Example 2) and kaolin (Comparative Example 5) that have been used conventionally, it can be seen that the foamed particles using the lecithin are deteriorated in external appearance and cannot be reused although the foamed particles are excellent in whether the foamed particles are fused to one another and non-washing moldability, and the foamed particles using the castor oil cannot be reused since the foamed particles are fused to one another.

## Claims

1. A method for preparing polyolefin-based foamed particles, comprising the steps of:
a dispersion step of mixing polyolefin-based resin particles with a dispersion medium to prepare a dispersion solution, the dispersion medium including at least one selected from sorbate, sorbitan, polyoxyethylene, amine oxide, betaine, and derivatives thereof;
a foaming step of adding a foaming agent into the dispersion, heating the mixture to raise a temperature of the mixture, and preparing polyolefin-based foamed particles through pressure drop of the heated mixture;
a separation step of separating the dispersion medium from the prepared polyolefin-based foamed particles to obtain polyolefin-based foamed particles, and
a reusing step of recovering the dispersion medium separated in the separation step to use the recovered dispersion medium as the dispersion medium in the dispersion step.

2. The method as claimed in claim 1, wherein the dispersion medium of the dispersion step includes 0.1 to 5.0 weight parts of at least one selected from sorbate, sorbitan, polyoxyethylene, amine oxide, betaine, and derivatives thereof with respect to 100 weight parts of the dispersion medium.

3. The method as claimed in claim 1, wherein the polyolefin-based resin is polypropylene or polypropylene copolymer.

4. The method as claimed in claim 1, wherein the foaming agent includes carbon dioxide.

5. The method as claimed in claim 1, wherein the method is performed using a preparation apparatus including a vessel into which a dispersion medium, polyolefin-based resin particles and a foaming agent are inputted; a separator for separating polyolefin-based foamed particles and dispersion medium discharged from the vessel from each other; a dryer for drying polyolefin-based foamed particles discharged from the separator; and a recycle line for recovering dispersion medium discharged from the separator and delivering the dispersion medium to the vessel.

6. The method as claimed in claim 5, wherein the separator includes a separation part having perforated holes formed thereon.

## Patentansprüche

1. Verfahren zum Herstellen Poylyolefin-basierender geschäumter Partikel, umfassend die Schritte:
einen Dispersionsschritt des Mischens Polyolefin-basierender Harz-Partikel mit einem Dispersionsmedium zum Herstellen einer Dispersionslösung, das Dispersionsmedium enthaltend mindestens eines ausgewählt aus Sorbat, Sorbitan, Polyoxyethylen, Aminoxid, Betain und deren Derivaten,
einen Schäumungsschritt des Zugebens eines Schäumungsmittels in die Dispersion, Erwärmens der Mischung zur Temperaturerhöhung der Mischung, und Herstellens Polyolefin-basierender geschäumter Partikel durch Druckabfall der erwärmten Mischung,
einen Trennungsschritt des Abtrennens des Dispersionsmediums vom den hergestellten Polyolefin-basierenden geschäumten Partikeln, um Polyolefin-basierende geschäumte Partikel zu gewinnen,
einen Wiederverwendungsschritt des Rückgewinnens des im Dispersionsschritt abgetrennten Dispersionsmediums, um das rückgewonnene Dispersionsmedium im Dispersionsschritt als Dispersionsmedium einzusetzen.

2. Verfahren gemäß Anspruch 1, wobei das Dispersionsmedium des Dispersionsschrittes 0,1 bis 5,0 Gewichtsteile von mindestens einem ausgewählt aus Sorbat, Sorbitan, Polyoxyethylen, Aminoxid, Betain und deren Derivaten enthält, bezogen auf 100 Gewichtsteile des Dispersionsmediums.

3. Verfahren gemäß Anspruch 1, wobei das Polyolefin-basierende Harz Polypropylen oder Polypropylen-Copolymer ist.

4. Verfahren gemäß Anspruch 1, wobei das Schäumungsmittel Kohlendioxid enthält.

5. Verfahren gemäß Anspruch 1, wobei das Verfahren durchgeführt wird unter Verwendung eines Präparationsapparates enthaltend ein Gefäß, in welches ein Dispersionsmedium, Polyolefin-basierende Harz-Partikel und ein Schäumungsmittel eingegeben werden, einen Separator, um Polyolefin-basierende geschäumte Partikel und Dispersionsmedium abgeführt aus den Gefäß voneinander zu trennen, einen Trockner zum Trocknen aus dem Separator abgeführter Polyolefin-basierender geschäumter Partikel, und eine Rückführungslinie zum Rückgewinnen von aus dem Separator abgeführtem Dispersionsmedium und Zuführen des Dispersionsmediums in das Gesäß.

6. Verfahren gemäß Anspruch 1, wobei der Separator ein Separationsteil mit darauf gebildeten perforierten Löchern enthält.

## Revendications

1. Procédé de préparation de particules moussées à base de polyoléfine, comprenant les étapes suivantes :
une étape de dispersion consistant à mélanger des particules de résine à base de polyoléfine avec un milieu de dispersion pour préparer une solution de dispersion, le milieu de dispersion comprenant au moins un élément choisi parmi le sorbate, le sorbitan, le polyoxyéthylène, l'oxyde d'amine, la bétaïne et leurs dérivés ;
une étape de moussage consistant à ajouter un agent moussant à la dispersion, à chauffer le mélange pour faire monter la température du mélange, et à préparer des particules moussées à base de polyoléfine par chute de pression du mélange chauffé ;
une étape de séparation consistant à séparer le milieu de dispersion des particules moussées à base de polyoléfine préparées pour obtenir des particules moussées à base de polyoléfine, et
une étape de réutilisation consistant à récupérer le milieu de dispersion séparé lors de l'étape de séparation pour réutiliser le milieu de dispersion récupéré comme milieu de dispersion lors de l'étape de dispersion.

2. Procédé selon la revendication 1, dans lequel le milieu de dispersion de l'étape de dispersion comprend de 0,1 à 5,0 parties en poids d'au moins un élément choisi parmi le sorbate, le sorbitan, le polyoxyéthylène, l'oxyde d'amine, la bétaïne et leurs dérivés par rapport à 100 parties en poids du milieu de dispersion.

3. Procédé selon la revendication 1, dans lequel la résine à base de polyoléfine est un polypropylène ou un copolymère de polypropylène.

4. Procédé selon la revendication 1, dans lequel l'agent moussant comprend du dioxyde de carbone.

5. Procédé selon la revendication 1, dans lequel le procédé est effectué au moyen d'un dispositif de préparation comprenant une cuve dans laquelle un milieu de dispersion, des particules de résine à base de polyoléfine et un agent moussant sont introduits ; un séparateur pour séparer les particules moussées à base de polyoléfine de l'agent moussant déversés de la cuve ; un déshydrateur pour déshydrater les particules moussées à base de polyoléfine déversées du séparateur ; et une ligne de recyclage pour récupérer le milieu de dispersion déversé du séparateur et acheminer le milieu de dispersion jusqu'à la cuve.

6. Procédé selon la revendication 5, dans lequel le séparateur comprend un élément de séparation sur lequel sont formés des trous perforés.
